# EUROPÄISCHE PATENTSCHRIFT

(11) **EP 0 855 317 B1**
(45) Veröffentlichungstag und Bekanntmachung des Hinweises auf die Patenterteilung: **23.04.2003**
(21) Anmeldenummer: 97119594.6
(22) Anmeldetag: 08.11.1997
(51) Int. Cl.: B60S 1/16, B60S 1/24, B60S 1/04

(54) **Antriebsvorrichtung, insbesondere für Scheibenwischer an Kraftfahrzeugen**
Drive device, especially for a motor vehicle windscreen wiper
Dispositif d'entraînement, en particulier pour essuie-glace de véhicule automobile

(30) Priorität: 25.01.1997 DE 19702664
(43) Veröffentlichungstag der Anmeldung: 29.07.1998
(73) Patentinhaber: ROBERT BOSCH GMBH, 70442 Stuttgart (DE)
(72) Erfinder: Kuehbauch, Gerd, 77830 Buehlertal (DE)

(56) Entgegenhaltungen:
- EP-A- 0 769 436
- DE-A- 3 045 560
- US-A- 3 829 924
- US-A- 4 969 227
- PATENT ABSTRACTS OF JAPAN vol. 008, no. 140 (M-305), 29.Juni 1984 & JP 59 038158 A (HONDA GIKEN KOGYO KK), 1.März 1984,

## Beschreibung

Die Erfindung betrifft eine Antriebsvorrichtung, insbesondere für Scheibenwischer an Kraftfahrzeugen, mit den im Oberbegriff des Anspruchs 1 genannten Merkmalen.

### Stand der Technik

Antriebsvorrichtungen der gattungsgemäßen Art sind bekannt. Diese weisen einen Antriebsmotor auf, der auf einer Wischerplatine montiert ist. Die Wischerplatine dient gleichzeitig der Aufnahme von Lagern, durch die jeweils eine Wischerwelle geführt ist. Die Wischerwelle ist drehbeweglich, jedoch axial festgelegt in den Lagern angeordnet. Sie ragt beidseitig über das Lager hinaus, wobei an dem einen Ende der Wischerwelle ein Kupplungsgestänge angreift und das andere Ende einen Wischerarm trägt. Das Kupplungsgestänge umfaßt jeweils einer Wischerwelle zugeordnete erste Kupplungsstangen und zweite Kupplungsstangen, die drehbeweglich miteinander verbunden sind. Die Kupplungsstangen sind über eine Kurbel antreibbar, wobei die Kurbel ihrerseits über ein Getriebe mit dem Antriebsmotor verbunden ist. Bei den bekannten Antriebsvorrichtungen ist nachteilig, dass diese sehr komplex aufgebaut sind und je nach Kraftfahrzeugtyp einen unterschiedlichen Aufbau besitzen. Insbesondere das zwischen dem Antriebsmotor und der Kurbel angeordnete Getriebe ist entsprechend der Einbaulage der gesamten Antriebsvorrichtung dem jeweiligen Kraftfahrzeugtyp angepasst., so dass entsprechend der Vielzahl unterschiedlicher Kraftfahrzeugtypen eine entsprechend große Anzahl unterschiedlicher Getriebe eingesetzt werden müssen. Da die Getriebe in der Regel eine Baueinheit mit dem Antriebsmotor bilden, ist eine entsprechend große Zahl dieser unterschiedlichen Baueinheiten vozuhalten. Insbesondere wenn sogenannten linksseitige Getriebeabtriebe oder rechtsseitige Getriebeabtriebe Verwendung finden sollen, kann keine standardisierte Antriebsvorrichtung verwendet werden.

Aus der US 4,969,227 ist eine Antriebsvorrichtung für Scheibenwischer von Kraftfahrzeugen bekannt, bei der ein Antriebsmotor eine Kurbel antreibt, die über ein Kupplungsgestänge, eine Wischerwelle zu einer pendelnden Bewegung veranlasst. Das Getriebe ist als Modul ausgebildet, dass einen links- und rechtsseitigen Getriebeabtrieb gestattet.

### Vorteile der Erfindung

Die erfindungsgemäße Antriebsvorrichtung mit den im Anspruch 1 genannten Merkmalen bietet den Vorteil, dass aus wenigen, standardisierten Bauteilen Antriebsvorrichtungen für unterschiedliche Kraftfahrzeugtypen zusammengesetzt werden können. Dadurch, dass das Getriebe von einem Modul gebildet wird, das einen linksund/oder rechtsseitigen Getriebeantrieb gestattet, läßt sich die Anzahl der vorzuhaltenden, unterschiedlichen Baugruppen für eine Antriebsvorrichtung erheblich reduzieren, da gleiche Baugruppen für Antriebsvorrichtungen unterschiedlicher Kraftfahrzeugtypen verwendet werden können. Dieses Getriebemodul kann für jede beliebige Antriebsvorrichtung verwendet werden und ist mit einem standardisierten Antriebsmotor in einfacher Weise komplettierbar. Hierdurch wird es möglich, die Antriebsmotoren getriebeneutral und ohne fahrzeugspezifische Merkmale, insbesondere hinsichtlich ihrer Einbauposition, herzustellen. Hierdurch lassen sich die Antriebsmotoren und die Getriebemodule in großer Stückzahl und damit preiswert herstellen. Unterschiedliche Antriebsmotoren müssen lediglich noch hinsichtlich einer unterschiedlichen Motorleistung vorgehalten werden.

Ferner ist es mit der erfindungsgemäßen Antriebsvorrichtung möglich, bei- jeder mit dem Getriebemodul ausgestatteten Antriebsvorrichtung zwei Kurbeln einzusetzen, von denen eine vorzugsweise einen linksseitigen Getriebeabtrieb und eine andere einen rechtsseitigen Getriebeabtrieb bildet. Hiermit können in einfacher Weise Antriebsvorrichtungen realisiert werden, die zwei gleichlaufende Wischerarme mit einer Wischwinkel-Phasenverschiebung aufweisen. Darüber hinaus sind Antriebsvorrichtungen in einfacher Weise realisierbar, bei denen gegenlaufende Wischerarme mit ebenfalls gleichzeitiger Wischwinkel-Phasenverachiebung möglich sind.

Weitere vorteilhafte Ausgestaltungen der Erfindung ergeben sich aus den in den Unteransprüchen genannten Merkmalen.

### Zeichnung

Die Erfindung wird nachfolgend in Ausführungsbeispielen anhand der zugehörigen Zeichnungen näher erläutert. Es zeigen:
- Figur 1: eine Explosionsdarstellung einer Antriebsvorrichtung;
- Figur 2: eine schematische Anordnung einer Antriebsvorrichtung in Draufsicht;
- Figur 3: eine schematische Anordnung einer Antriebsvorrichtung für eine Gleichlaufanlage mit Phasenwinkel-Verschiebung;
- Figur 4: eine schematische Anordnung einer Antriebsvorrichtung für eine Gegenlaufanlage;
- Figur 5: eine Schnittdarstellung eines Getriebemoduls;
- Figur 6: ein Detail eines Getriebemoduls und
- Figur 7: eine Teilansicht eines Getriebemoduls in einer weiteren Ausführungsvariante.

### Beschreibung der Ausführungsbeispiele

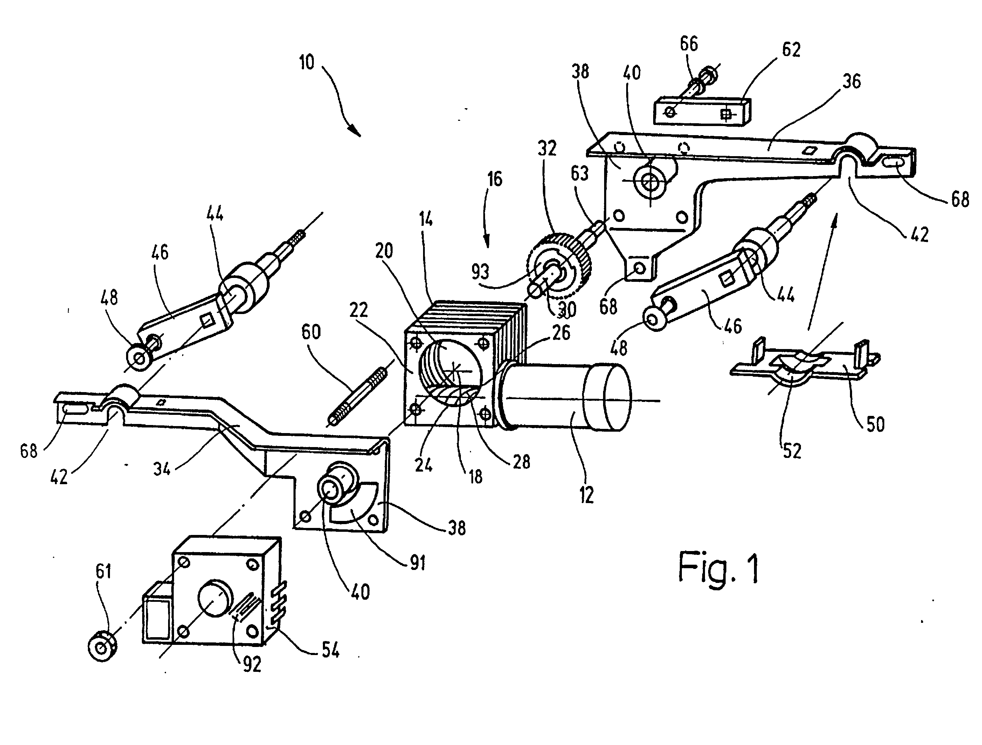

In Figur 1 ist eine insgesamt mit 10 bezeichnete Antriebsvorrichtung in einer Explosionsdarstellung gezeigt. Die Antriebsvorrichtung 10 besitzt einen Antriebsmotor 12 sowie ein Modul 14, das in noch zu erläuternder Weise ein Grundmodul eines Getriebes 16 bildet. Das Modul 14 ist in etwa quaderförmig ausgebildet und besitzt eine entlang einer Längsachse 18 verlaufende Durchgangsöffnung 20. Die Durchgangsöffnung 20 ist vorzugsweise zylindrisch ausgebildet und besitzt einen derartigen Querschnitt, daß lediglich noch relativ schmale Wandabschnitte 22 des Moduls 14 verbleiben, die ebenfalls in Richtung der Längsachse 18 verlaufen. Das Modul 14 besitzt ferner eine -in Figur 1 nicht sichtbare- Sacköffnung, die senkrecht zur Längsachse 18 verläuft. Die Sacköffnung ist so angeordnet, daß diese die Mantelfläche 24 der Durchgangsöffnung 20 schneidet und somit innerhalb eines hier unten gezeichneten Wandabschnittes 22 verläuft und in Richtung der Durchgangsöffnung 20 offen ist. In diese Sacköffnung greift eine Antriebswelle 26 des Antriebsmotors 12 ein. Auf der Antriebswelle 26 ist eine Antriebsschnecke 28 drehfest angeordnet. Die Antriebsschnecke 28 greift hierbei in die Durchgangsöffnung 20 ein.

Innerhalb der Durchgangsöffnung 20 ist ein auf einer Drehachse 30 drehfest angeordnetes Zahnrad 32 angeordnet. Die Drehachse 30 steht hier beidseitig des Moduls 14 in Richtung der Längsachse 18 über. Das Zahnrad 32 kämmt die Antriebsschnecke 28.

An beiden Seiten des Moduls 14 ist jeweils eine Platine 34 beziehungsweise 36 angeordnet. Jede der Platinen 34 und 36 bildet einen Flansch 38 aus, der in Anlagekontakt mit dem Modul 14 kommt und die Durchgangsöffnung 20 seitlich abschließt. Der Flansch 38 besitzt eine Lagerbuchse 40, innerhalb der die Drehachse 30 gelagert ist. Die Flansche 38 bilden somit quasi einen Boden beziehungsweise Deckel des Getriebes 16.

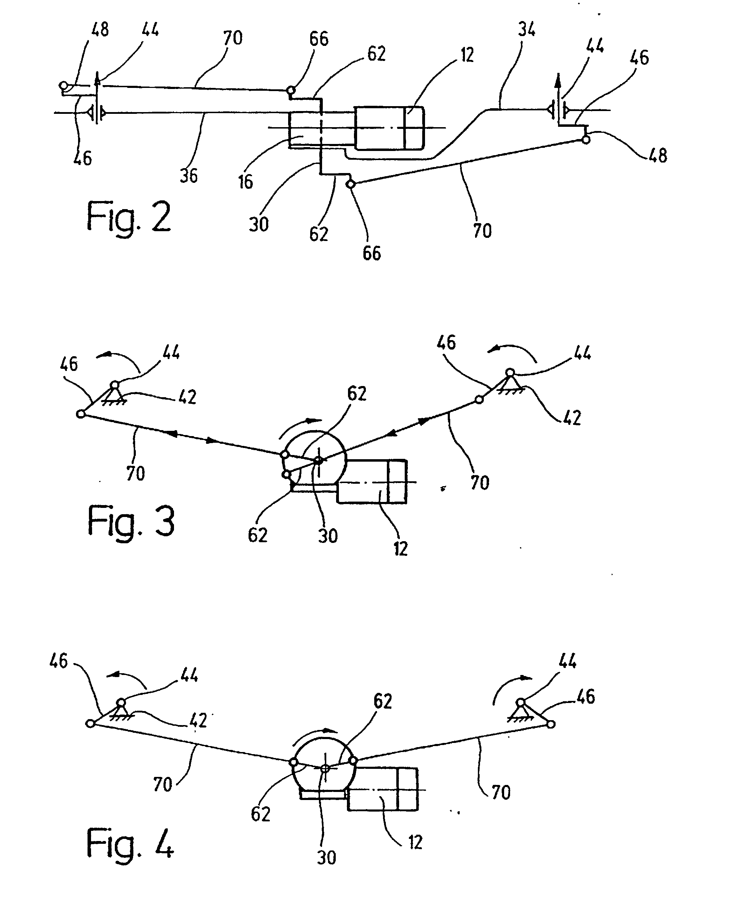

An ihrem dem Flansch 38 abgewandten Ende besitzen die Platinen 34 und 36 jeweils ein Lager 42, das der Aufnahme einer Wischerwelle 44 dient. Die Wischerwelle 44 trägt in Figur 1 nicht dargestellte Wischerarme. Die Wischerwelle 44 ist drehfest mit einer Gelenkstange 46 verbunden, die einen parallel zur Wischerwelle 44 angeordneten Zapfen 48 trägt. Der Zapfen 48 ist drehbeweglich mit einer weiteren -in Figur 1 ebenfalls nicht dargestellten- Gelenkstange 70 (Figur 2) verbunden, deren anderes Ende mit einer auf der Drehachse 30 drehfest angeordneten Kurbel 62 verbunden ist. Die Kurbel 62 ist an der dem Modul 14 abgewandten Seite der Platine 36 angeordnet, da die Drehachse 30 eine solche Länge aufweist, die über die Lagerbuchsen 40 der Platine 36 hinausragt.

Zur Fixierung der Wischerwelle 44 in dem Lager 42 ist eine Lagerschale 50 vorgesehen, die eine entsprechende Aufnahme 52 für die Wischerwelle 44 ausbildet. Die Lagerschale 50 ist über geeignete Befestigungsmittel kraftschlüssig mit der Platine 34 beziehungsweise 36 verbunden.

Ferner ist ein Ansteuermodul 54 vorgesehen, das der elektrischen Ansteuerung des Antriebsmotors 12 dient. Hierzu sind nicht näher bezeichnete Anschlußkontakte 56 vorgesehen, die einerseits eine Spannungsversorgung sicherstellen und andererseits der Signalbeaufschlagung für die bekannten unterschiedlichen Betriebsweisen der Antriebsvorrichtung 10, schneller Lauf, langsamer Lauf, Intervallbetrieb, Lauf in Parkstellung usw., dienen. Der dem Ansteuermodul 54 zugewandte Flansch 38 besitzt eine Durchgangsöffnung 91, durch die über Schleifkontakte 92 am Modul 54 und eine Kontaktscheibe 93 auf dem Zahnrad 31 die Parkposition der Drehachse 30 und damit der Kurbel 62 gesteuert werden kann (Lauf in Parkposition). Das Ansteuermodul 54 besitzt eine Durchgangsöffnung 58, die von der Lagerbuchse 40 der Platine 34 durchgriffen wird, so daß eine kompakte Bauweise sichergestellt ist.

Die Endmontage der Antriebsvorrichtung 10 erfolgt mittels Gewindebolzen 60, die in entsprechend vorgesehene, fluchtende Durchgangsöffnungen des Moduls 14, der Platinen 34 und 36 sowie des Ansteuermoduls 54 einbringbar sind. Im gezeigten Beispiel sind insgesamt vier Gewindebolzen 60 vorgesehen. Zum Arretieren weisen die Gewindebolzen 60 beidseitig jeweils ein Gewinde auf, auf das ein Befestigungsmittel, beispielsweise eine Mutter 61, mit entsprechenden Sicherungsmitteln schraubbar ist.

Auf ein freies Ende 63 der Drehachse 30 ist eine Kurbel 62 drehfest angeordnet. Parallel zur Drehachse 30 weist die Kurbel 62 einen Zapfen 66 auf, an dem die mit dem Zapfen 48 der Gelenkstangen 46 verbundenen zweiten Gelenkstangen 70 (Figur 2) ebenfalls drehbeweglich angelenkt ist.

Die Antriebsvorrichtung 10 zeigt die allgemein bekannte Funktion, so daß auf eine detaillierte Erläuterung verzichtet werden kann. Mittels des Ansteuermoduls 54 wird der Antriebsmotor 12 angesteuert. Hierdurch wird die Antriebswelle 26 und somit die Antriebsschnecke 28, in eine Drehbewegung versetzt. Die Drehbewegung der Antriebsschnecke 28 wird auf das kämmende Zahnrad 32 übertragen, so daß die Drehachse 30 eine zur Antriebswelle 26 um 90° versetzte Drehbewegung erfährt. Diese Drehbewegung der Drehachse 30 wird auf die Kurbel 62 übertragen. Über die nicht dargestellten Gelenkstangen zwischen der Kurbel 62 und den Gelenkstangen 46 wird die Drehbewegung der Kubel 62 in eine Schwenkbewegung der Wischerwelle 44 umgesetzt, so daß die auf den Wischerwellen 44 angeordneten Wischerarme ihre typische Schwenkbewegung erfahren.

Die Antriebsvorrichtung 10 ist insgesamt sehr einfach und robust aufgebaut und aufgrund ihres modularen Aufbaus jeder beliebigen Einbauanforderung, insbesondere bei unterschiedlichen Kraftfahrzeugtypen, anpaßbar. Der Antriebsmotor 12 sowie das Modul 14, die das Zahnrad 32 tragende Drehachse 30 und das Ansteuermodul 54 kann quasi für jede beliebige Antriebsvorrichtung 10 verwendet werden. Eine kraftfahrzeugspezifische Anpassung erfolgt ausschließlich über die Platinen 34 und 36. Diese weisen die entsprechende kraftfahrzeugtypische Formgestalt auf, so daß die Wischerwellen 44 an den vorgesehenen Positionen liegen. Entsprechend der Länge, eventueller Abknickungen usw. kann eine Anpassung erfolgen. Da die Platinen 34 und 36 aus einfachen Formteilen, beispielsweise Blechformteilen oder auch robusten Kunststoffspritzteilen oder ähnliches, bestehen können, sind diese in einfacher Weise herstellbar, so daß nur noch diese Teile entsprechend der Anzahl der unterschiedlich zu bestückenden Kraftfahrzeuge in verschiedenen Ausführungen zur Verfügung gestellt werden müssen. Die übrigen Bestandteile der Antriebsvorrichtung 10 sind kraftfahrzeugtypübergreifend einsetzbar. Eventuelle Unterschiede können lediglich nur noch hinsichtlich der Leistung des Antriebsmotors 12 bestehen. Durch die universell einsetzbaren Teile können diese in großen Stückzahlen und somit preiswert hergestellt werden, so daß der Gesamtaufwand für die Realisierung der Antriebsvorrichtung 10 relativ gering ist.

Die Platinen 34 und 36 bilden ferner Befestigungspunkte 68 für eine Befestigung der Antriebsvorrichtung 10 am Kraftfahrzeug, insbesondere an der Karosserie des Kraftfahrzeugs, aus. Somit kann auch hier eine Anpassung an unterschiedliche Befestigungspunkte bei unterschiedlichen Kraftfahrzeugen über die Platinen 34 und 36 erfolgen.

Durch den gefundenen Aufbau der Antriebsvorrichtung 10, insbesondere durch das Modul 14, den Antriebsmotor 12 und die das Zahnrad 32 tragende Drehachse 30, ist eine universelle Verwendbarkeit gegeben. So kann beispielsweise ein Getriebeabtrieb beidseitig des Moduls 14 erfolgen, indem beispielsweise auf jedem freien Ende der Drehachse 30 eine Kurbel 62 anordbar ist. Hierdurch können in einfacher Weise Gleichlaufanlagen mit Wischwinkel-Phasenverschiebung oder Gegenlaufanlagen mit oder ohne Wischwinkel-Phasenverschiebung realisiert werden. Derartige Anordnungen sind schematisch in den Figuren 2 bis 4 dargestellt. In den Figuren 2 bis 4 ist die Antriebsvorrichtung 10 lediglich schematisch angedeutet, wobei gleiche Teile wie in Figur 1 mit gleichen Bezugszeichen versehen und nicht nochmals erläutert sind.

Anhand von Figur 2 wird deutlich, daß an den freien Enden, die über die Platine 36 und hier auch die Platine 34 und das Ansteuermodul 54 hinausragen, jeweils eine Kurbel 62 angeordnet ist. Somit kann gleichzeitig ein links- und rechtsseitiger Getriebeabtrieb erfolgen, wobei jeweils eine der Kurbeln 62 der Ansteuerung der Wischbewegung eines Wischarms dient. Über die Justierung der Kurbeln 62 beziehungsweise der Gelenkstangen 46 und 70 zueinander kann die Wischbewegung aufeinander abgestimmt werden. So ist beispielsweise gemäß der in Figur 3 gezeigten, um 90° verschwenkten, schematischen Ansicht eine Gleichlaufanlage mit einer Wischwinkel-Phasenverschiebung möglich.

Die Phasenverschiebung wird durch die winkelversetzte Anordnung der Kurbeln 62 auf der Drehachse 30 bestimmt. Entsprechend dem Winkel zwischen den beiden Kurbeln 62 erfolgt die Phasenverschiebung in der Wischbewegung der beiden Wischarme.

Figur 4 zeigt eine schematische Ansicht einer Gegenlaufanlage, wobei ebenfalls eine Wischwinkel-Phasenverschiebung vorgesehen ist. Hierbei sind die Kurbeln 62 derart an den freien Enden der Drehachse 30 angeordnet, daß diese entgegengesetzt zueinander weisen. Bei einem von 180° abweichenden Winkel zwischen den Kurbeln 62 wird eine Wischwinkel-Phasenverschiebung erreicht. Sind die Kurbeln 62 exakt 180° zueinander versetzt, wäre eine Gegenlaufanlage ohne Wischwinkel-Phasenverschiebung realisiert.

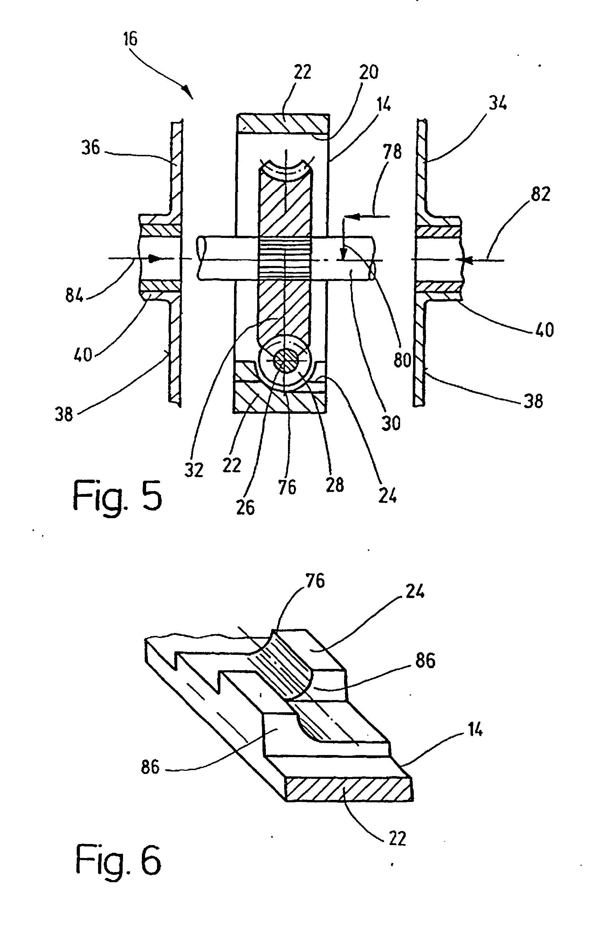

In Figur 5 ist eine Schnittdarstellung durch das Getriebe 16 gezeigt. Anhand dieser Darstellung soll neben dem Aufbau gleichzeitig die Montage des Getriebes 16 erläutert werden. Das Modul 14 weist die Durchgangsöffnung 20 auf, wobei die Mantelfläche 24 im hier unten gezeigten Bereich von einer in Figur 1 nicht dargestellten Sacköffnung 76 geschnitten wird. Innerhalb der in Richtung der Durchgangsöffnung 20 offenen Sacköffnung 76 ist die Antriebswelle 26 mit der darauf angeordneten Antriebsschnecke 28 fliegend gelagert. Das heißt, innerhalb des Moduls 14 ist kein Gegenlager für die Antriebswelle 26 beziehungsweise die Antriebsschnecke 28 vorgesehen, sondern diese wird durch am Antriebsmotor 12 vorgesehene Lager fixiert. Die Antriebsschnecke 28 wird von dem auf der Drehachse 30 angeordneten Zahnrad 32 gekämmt. Durch den gefundenen Aufbau des Getriebes 16 kann das Zahnrad 32 entsprechend der Pfeile 78 beziehungsweise 80 auf die Antriebsschnecke 28 aufgesetzt werden. Durch den zur Verfügung stehenden Einbauraum ist es möglich, das Zahnrad 32 als sogenanntes Voll-Globoid-Zahnrad 32 auszubilden, das die Gänge der Antriebsschnecke 28 quasi hintergreift. Hierdurch kann eine sehr hohe Belastbarkeit des Getriebes 16 erreicht werden. Bei Getrieben nach dem Stand der Technik war der Einsatz derartiger Voll-Globoid-Zahnräder 32 aufgrund des Aufbaus der Getriebe nicht möglich. Nach Positionierung der Drehachse 30 mit dem Zahnrad 32 werden die Platinen 36 beziehungsweise 34 mit dem Modul 14 entsprechend der Pfeile 82 beziehungsweise 84 gefügt und mittels der Gewindebolzen 60 arretiert. Die Drehachse 30 greift hierbei in die Lagerbuchsen 40 der Flansche 38 der Platinen 34 und 36 ein beziehungsweise ist durch diese hindurchgeführt.

Anhand der in Figur 6 gezeigten vergrößerten Detailansicht des Wandbereiches 22 mit der die Mantelfläche 24 schneidenden Sacköffnung 76 wird eine vorteilhafte Lagerung der Antriebsschnecke 28 gezeigt. Die Sacköffnung 76 wird im Bereich der Durchgangsöffnung 20 von sogenannten Rampen 86 gebildet, die axial zueinander beabstandet sind. Darüber hinaus sind die Rampen 86 180° zueinander versetzt angeordnet. Hierdurch wird es möglich, eine Rampenüberdeckung von größer 180° für die Antriebsschnecke 28 zu erreichen. Das heißt, die Antriebsschnecke 28 wird über die Hälfte ihres Umfangs von der Sacköffnung 76 umgriffen, oder mit anderen Worten ausgedrückt, der Öffnungswinkel der Sacköffnung 76 zu der Durchgangsöffnung 20 des Moduls 12 ist kleiner als 180°. Hierdurch wird die fliegende Lagerung der Antriebsschnecke 28 verbessert, da während des Betriebes auftretende Kräfte oder andere äußere Einflüsse nicht zu einem seitlichen Ausweichen der Antriebsschnecke 28 führen können. Diese bleibt durch die Rampen 86 exakt geführt. Somit weist das Getriebe 16 auch eine sehr gute Kraftübertragung von der Antriebsschnecke 28 auf das Zahnrad 32 auf.

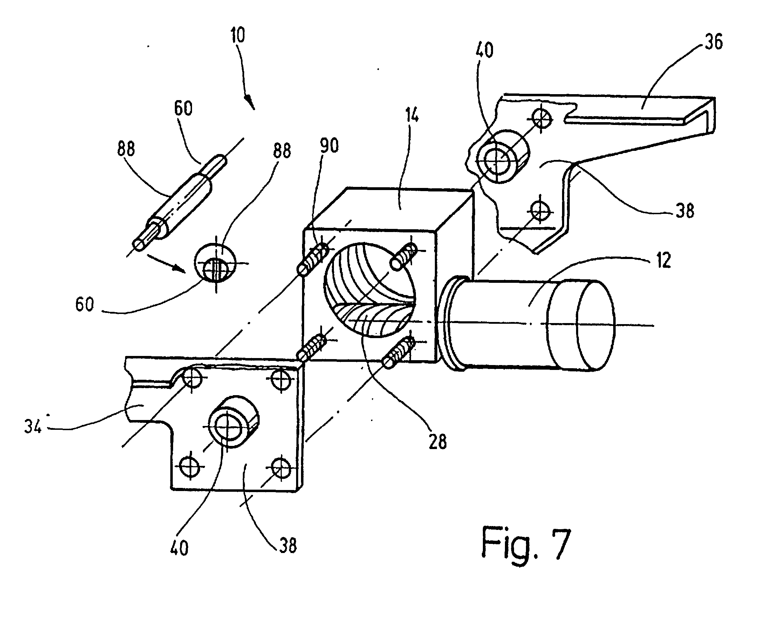

In Figur 7 ist die Antriebsvorrichtung 10 nochmals ausschnittsweise im Bereich des Getriebes 16 gezeigt. Anhand Figur 7 soll eine vorteilhafte Möglichkeit der Einstellung des Zahnflankenspiels zwischen der Antriebsschnecke 28 und dem Zahnrad 32 verdeutlicht werden. Hierzu weisen die Gewindebolzen 60 einen exzentrischen Führungsabschnitt 88 auf, der innerhalb der Durchgangsöffnungen 90 des Moduls 14 angeordnet ist. Durch den exzentrischen Führungsabschnitt 88 kann eine Justage der Flansche 38 der Platinen 34 beziehungsweise 36 erfolgen. Durch diese Höhenverstellmöglichkeit der Platinen 34 und 36 wird gleichzeitig die Drehachse 30 -in Figur 7 nicht dargestellt- in ihrer Höhe verstellt, da die Lagerbuchsen 40 als Bestandteil des Flansches 38 ebenfalls über die exzentrischen Führungsabschnitte 88 höhenjüstierbar sind. Somit wird es also möglich, die Drehachse 30 und das hierauf angeordnete Zahnrad 32 relativ zu der Antriebsschnecke 28 zu justieren und ein optimales Zahnflankenspiel stufenlos einzustellen.

## Patentansprüche

1. Antriebsvorrichtung, insbesondere für Scheibenwischer an Kraftfahrzeugen, mit einem Antriebsmotor, einer von dem Antriebsmotor antreibbaren Kurbel sowie einem über die Kurbel in eine Schwenkbewegung versetzbaren Kupplungsgestänge, das einerseits mit der Kurbel und andererseits mit wenigstens einer Wischerwelle verbunden ist, und einem zwischen dem Antriebsmotor und der Kurbel angeordneten Getriebe, **dadurch gekennzeichnet, dass** das Getriebe (16) ein Modul (14) aufweist, das einen linksund/oder rechtsseitigen Getriebeantrieb gestattet und beidseitig von Platinen (34, 36) begrenzt wird, die gleichzeitig Lager (42) für die Wischerwellen (44) ausbilden.

2. Antriebsvorrichtung nach Anspruch 1, **dadurch gekennzeichnet, dass** die Platinen (34, 36) Flansche (38) besitzen, die eine Durchgangsöffnung (20) des Moduls (14) abdeckeln und Lagerbuchsen (40) für eine in dem Modul (14) gelagerte Drehachse (30) aufweisen.

3. Antriebsvorrichtung nach Anspruch 2, **dadurch gekennzeichnet, dass** auf der Drehachse (30) ein Zahnrad (32) drehfest angeordnet ist, das mit einer von dem Antriebsmotor (12) antreibbaren Antriebsschnecke (28) kämmt.

4. Antriebsvorrichtung nach einem der Ansprüche 2 oder 3, **dadurch gekennzeichnet, dass** die Drehachse (30) wenigstens über eine der Lagerbuchsen (40) hinaus verlängert ist und dort wenigstens eine Kurbel (62) trägt.

5. Antriebsvorrichtung nach einem der Ansprüche 2 bis 4, **dadurch gekennzeichnet, dass** bei beidseitig angeordneten Kurbeln (62) diese zur Ausbildung einer Wischwinkel-Phasenverschiebung winkelversetzt zueinander mit der Drehachse (30) verbunden sind.

6. Antriebsvorrichtung nach einem der Ansprüche 1 bis 5, **dadurch gekennzeichnet, dass** die Platinen (34, 36) radial zu einer Längsachse (18) des Moduls (14) höhenverstellbar angeordnet sind.

7. Antriebsvorrichtung nach Anspruch 6, **dadurch gekennzeichnet, dass** die Platinen (34, 36) mittels Gewindebolzen (60) mit dem Modul (14) kraftschlüssig verbunden sind, die einen exzentrischen Führungsabschnitt (88) aufweisen, der innerhalb einer die Gewindebolzen (60) aufnehmenden Durchgangsöffnung des Moduls (14) angeordnet ist.

8. Antriebsvorrichtung nach einem der Ansprüche 1 bis 7, **dadurch gekennzeichnet, dass** über die Platinen (34, 36) eine kraftfahrzeugspezifische Anpassung der Antriebsvorrichtung (10) erfolgt.

9. Antriebsvorrichtung nach einem der vorhergehenden Ansprüche, **dadurch gekennzeichnet, dass** das Zahnrad (32) ein Globoid-Zahnrad ist.

10. Antriebsvorrichtung nach einem der vorhergehenden Ansprüche, **dadurch gekennzeichnet, dass** eine Sacköffnung (76) für die Lagerung der Antriebsschnecke (28) von Rampen (86) gebildet wird, die sich vorzugsweise beidseitig in Richtung der Durchgangsöffnung (20) des Moduls (14) öffnen.

11. Antriebsvorrichtung nach Anspruch 10, **dadurch gekennzeichnet, dass** die Rampen (86) axial beabstandet versetzt zueinander angeordnet sind und einen Überdeckungsgrad von größer als 90° über die Antriebsschnecke (28) aufweisen.

12. Antriebsvorrichtung nach einem der Ansprüche 3 bis 11, **dadurch gekennzeichnet, dass** mindestens einer der Flansche (38) mindestens eine Durchgangsöffnung (91) aufweist, durch die die Position des Zahnrads (32) detektierbar ist.

## Claims

1. Drive device, in particular for screen wipers on motor vehicles, with a drive motor, with a crank capable of being driven by the drive motor and also with a coupling linkage capable of being set in pivoting movement via the crank and connected, on the one hand, to the crank and, on the other hand, to at least one wiper shaft, and with a gear arranged between the drive motor and the crank, **characterized in that** the gear (16) has a module (14) which allows a left-sided and/or right-sided gear drive and which is delimited on both sides by sheet bars (34, 36) which at the same time form bearings (42) for the wiper shafts (44).

2. Drive device according to Claim 1, **characterized in that** the sheet bars (34, 36) possess flanges (38) which cover a passage orifice (20) of the module (14) and which have bearing bushes (40) for a rotary shaft (30) mounted in the module (14).

3. Drive device according to Claim 2, **characterized in that** the rotary shaft (30) has arranged on it fixedly in terms of rotation a gearwheel (32) which meshes with a drive worm (28) capable of being driven by the drive motor (12).

4. Drive device according to one of Claims 2 or 3, **characterized in that** the rotary shaft (30) is prolonged at least beyond one of the bearing bushes (40) and there carries at least one crank (62).

5. Drive device according to one of Claims 2 to 4, **characterized in that,** with cranks (62) being arranged on both sides, these are connected to the rotary shaft (30) with an angular offset in relation to one another in order to produce wiping-angle phase displacement.

6. Drive device according to one of Claims 1 to 5, **characterized in that** the sheet bars (34, 36) are arranged so as to be vertically adjustable radially in relation to a longitudinal axis (18) of the module (14).

7. Drive device according to Claim 6, **characterized in that** the sheet bars (34, 36) are connected non-positively to the module (14) by means of threaded bolts (60) which have an eccentric guide portion (88) which is arranged within a passage orifice of the module (14), the said passage orifice receiving the threaded bolts (60).

8. Drive device according to one of Claims 1 to 7, **characterized in that** the drive device (10) is adapted specifically to the motor vehicle via the sheet bars (34, 36).

9. Drive device according to one of the preceding claims, **characterized in that** the gearwheel (32) is an enveloping gearwheel.

10. Drive device according to one of the preceding claims, **characterized in that** a blind orifice (76) for mounting the drive worm (28) is formed by ramps (86) which open preferably on both sides in the direction of the passage orifice (20) of the module (14).

11. Drive device according to Claim 10, **characterized in that** the ramps (86) are arranged so as to be spaced apart axially and offset in relation to one another and have a degree of overlap greater than 90° over the drive worm (28).

12. Drive device according to one of Claims 3 to 11, **characterized in that** at least one of the flanges (38) has at least one passage orifice (91), through which the position of the gearwheel (32) can be detected.

## Revendications

1. Dispositif d'entraînement, notamment pour un système d'essuie-glace d'un véhicule automobile, comportant un moteur, une manivelle entraînée par le moteur ainsi qu'une tringlerie mise en mouvement de pivotement par la manivelle, et qui est reliée d'un côté à la manivelle et de l'autre à au moins un arbre d'essuie-glace ainsi qu'une transmission entre le moteur et la manivelle,
**caractérisé en ce que**
la transmission (16) comporte un module (14) permettant un entraînement de la transmission du côté gauche et/ou du côté droit et délimité des deux côtés par des platines (34, 36) qui constituent en même temps le palier (42) pour les arbres (44) d'essuie-glace.

2. Dispositif d'entraînement selon la revendication 1,
**caractérisé en ce que**
les platines (34, 36) possèdent des brides (38) qui couvrent le passage (20) du module (14) et des coussinets de palier (40) pour un axe de rotation (30) monté dans le module (14).

3. Dispositif d'entraînement selon la revendication 2,
**caractérisé en ce que**
l'axe de rotation (30) porte une roue dentée (32) solidaire en rotation, engrenant avec une vis d'entraînement (28) entraînée par le moteur (12).

4. Dispositif d'entraînement selon l'une quelconque des revendications 2 ou 3,
**caractérisé en ce que**
l'axe de rotation (30) est prolongé au moins au-delà de l'un des coussinets de palier (40) et porte à cet endroit au moins une manivelle (62).

5. Dispositif d'entraînement selon l'une quelconque des revendications 2 à 4,
**caractérisé en ce que**
pour des manivelles (62) portées des deux côtés, celles-ci sont reliées de manière décalée angulairement à l'axe de rotation (30) pour créer un déphasage des angles de balayage.

6. Dispositif d'entraînement selon l'une quelconque des revendications 1 à 5,
**caractérisé en ce que**
les platines (34, 36) sont réglables en hauteur, radialement par rapport à l'axe longitudinal (18) du module (14).

7. Dispositif d'entraînement selon la revendication 6,
**caractérisé en ce que**
les platines (34, 36) sont reliées par une liaison de force au module (14) à l'aide de tiges filetées (60) qui présentent un segment de guidage excentré (88) placé à l'intérieur d'un orifice de passage du module (14) recevant les tiges filetées (60).

8. Dispositif d'entraînement selon l'une quelconque des revendications 1 à 7,
**caractérisé en ce que**
les platines (34, 36) réalisent une adaptation du dispositif d'entraînement (10) spécifique au véhicule.

9. Dispositif d'entraînement selon l'une quelconque des revendications précédentes,
**caractérisé en ce que**
la roue dentée (32) est une roue globoïdale.

10. Dispositif d'entraînement selon l'une quelconque des revendications précédentes,
**caractérisé par**
un orifice borgne (76) pour recevoir la vis d'entraînement (28), cet orifice étant formé par des rampes (86) qui s'ouvrent de préférence des deux côtés en direction de l'orifice de passage (20) du module (14).

11. Dispositif d'entraînement selon la revendication 10,
**caractérisé en ce que**
les rampes (86) sont décalées les unes des autres de manière axiale et présentent un degré de recouvrement supérieur à 90° par rapport à la vis d'entraînement (28).

12. Dispositif d'entraînement selon l'une quelconque des revendications 3 à 11,
**caractérisé en ce qu'**
au moins l'une des brides (38) comporte un orifice de passage (91) par lequel se détecte la position de la roue dentée (32).
